Europäisches Patentamt

European Patent Office

Office européen des brevets

(19)

(11) Numéro de publication: **0 000 109**
**B1**

(12) **FASCICULE DE BREVET EUROPEEN**

(45) Date de publication du fascicule de brevet: **04.11.81**

(21) Numéro de dépôt: **78400008.5**

(22) Date de dépôt: **01.06.78**

(51) Int. Cl.³: **G 02 F 1/01** //G02F1/13, G02F1/17

(54) Procédé de fabrication d'une cellule d'affichage à film liquide et une cellule obtenue par ce procédé.

(30) Priorité: **01.06.77 FR 7716676**
**01.06.77 FR 7716677**

(43) Date de publication de la demande:
**20.12.78 Bulletin 78/1**

(45) Mention de la délivrance du brevet:
**04.11.81 Bulletin 81/44**

(84) Etats Contractants Désignés:
**CH DE GB NL**

(56) Documents cités:
**FR - A - 2 154 428**
**FR - A - 2 163 858**
**FR - A - 2 297 471**

**IBM TECHNICAL DISCLOSURE BULLETIN,**
**vol. 16, no, 2, juillet 1973**
**New York U.S.**
**H. D. EDMONDS et al. "Liquid crystal cell filling",**
**pages 395—396**

**IBM TECHNICAL DISCLOSURE BULLETIN,**
**vol. 19, no. 10, mars 1977**
**New York U.S.**
**L. D. BOWDEN et al. "Electrode for electro-**
**chromic display", page 3879**

(73) Titulaire: **COMMISSARIAT A L'ENERGIE**
**ATOMIQUE Etablissement de Caractère**
**Scientifique Technique et Industriel**
**B.P. 510**
**F-75752 Paris Cedex 15 (FR)**

(72) Inventeur: **Destannes, Louis**
**31 Les Provençales, Poisat**
**F-38320 Eybens (FR)**
Inventeur: **Duchene, Jacques**
**23, boulevard du Maréchal Leclerc**
**F-38000 Grenoble (FR)**
Inventeur: **Meyer, Robert**
**1, rue Wilson**
**F-38610 Gieres (FR)**

(74) Mandataire: **Signore, Robert et al,**
**c/o BREVATOME 25, rue de Ponthieu**
**F-75008 Paris (FR)**

Courier Press, Leamington Spa, England.

Procédé de fabrication d'une cellule d'affichage à film liquide et une cellule obtenue par ce procédé.

La présente invention a pour objet un procédé de fabrication d'une cellule d'affichage à film liquide et une cellule obtenue par ce procédé.

Le domaine technique auquel se rapporte l'invention est l'affichage de caractères alphanumériques ou analogiques.

Une cellule d'affichage à film liquide est constituée d'une première lame isolante revêtue d'une électrode, d'une seconde lame isolante transparente revêtue d'une électrode semi-transparente et d'une paroi se trouvant entre lesdites lames et à leur périphérie et étant faite en un premier matériau chimiquement inerte vis-à-vis dudit film. Une telle cellule est décrite notamment dans l'article de la revue "IBM Technical Disclosure Bulletin" vol. 16, n° 2, Juillet 1973, pages 395—396. Différents moyens sont prévus pour faire varier l'aspect que présentent certaines zones de la cellule, de telle manière qu'on puisse faire apparaître et disparaître à volonté des caractères alphanumériques ou autres.

On connaît des cellules d'affichage de ce genre qui utilisent un film de cristal liquide auquel on applique un champ électrique d'amplitude et de fréquence bien déterminées. Sous l'influence dudit champ, les molécules de cristal liquide acquièrent des orientations particulières, ce qui permet, à l'aide d'un éclairage approprié, de faire apparaître les signes désirés.

On connaît aussi des cellules d'affichage qui utilisent un film électrolytique. Les réactions électrochimiques qui apparaissent au voisinage d'une des électrodes permettent de déposer et de dissoudre des couches réfléchissantes ou absorbantes. On pourra consulter à ce sujet, et par exemple, l'article de Salomon Zaromb intitulé "Theory and Design Principles of the Reversible Electroplating Light Modulator", publié dans la revue "Journal of the Electrochemical Society" d'octobre 1962, page 903.

De tels dispositifs posent de nombreux problèmes de réalisation. Pour les cellules à cristal liquide, il s'agit avant tout d'obtenir une épaisseur constante du film liquide car le champ électrique appliqué en dépend. A cette fin, on utilise des cales d'épaisseur sur lesquelles viennent s'appuyer les deux lames. L'étanchéité de la cellule à cristal liquide ne pose pas un problème aussi difficile et elle peut être obtenue aisément par un joint périphérique appliqué autour de la cellule. A propos de cette technique, on pourra consulter par exemple, la publication FR - A - 2 163 858.

Pour les cellules à film électrolytique, l'ordre des difficultés est inversé: l'obtention d'une épaisseur constante est moins critique, mais l'étanchéité est une question primordiale. En effet, les solvants entrant dans la composition du film électrolytique sont, en général, des produits volatils à la température ambiante, qui présentent un coefficient de dilatation important, qui sont extrêmement fluides et qui sont susceptibles de réagir chimiquement avec de nombreux composés organiques. C'est le cas notamment de l'acétonitrile et de l'alcool méthylique qui sont largement utilisés dans les cellules d'affichage électrolytique.

Dans ces conditions, il est difficile d'obtenir une étanchéité parfaite pour ce type de cellule et cela pendant une très longue durée. On peut dire que ce problème n'a pas été résolu de façon satisfaisante dans l'art antérieur.

En effet, les solutions proposées jusqu'à ce jour, pour les cellules d'affichage électrolytique, sont essentiellement des transpositions des solutions utilisables dans d'autres cellules de visualisation, à cristaux liquides par exemple. Elles sont les suivants:
a) étanchéité par bouchons:

Ils peuvent être de deux types:

les bouchons métalliques: le procédé consiste à écraser, dans un trou pratiqué dans l'une des parois de la cellule, un métal mou tel que l'indium, le plomb ou l'étain; mais ces métaux sont dissous dans l'électrolyte, ce qui modifie la composition de la solution;

les bouchons en polychlorure de vinyle ou en téflon: ils résistent bien à l'action chimique de l'électrolyte et de ses vapeurs, mais ils sont chassés sous l'effet des augmentations de pression dans la cellule, qui peuvent intervenir lors de son échauffement.
b) étanchéité par colles:

Ces colles sont le plus souvent constituées par des composés organiques qui sont, eux aussi, dissous par l'électrolyte. L'utilisation de ces corps présente en outre l'inconvénient de nécessiter, à la température ambiante, des temps de séchage ou de polymérisation très longs qui sont incompatibles avec la vitesse d'évaporation du solvant de l'électrolyte;
c) étanchéité par ciments:

Certains ciments, à prise rapide, sont constitués de composés minéraux inertes chimiquement vis-à-vis de l'électrolyte; ils sont cependant poreux et, de ce fait, incapables d'assurer une étanchéité correcte à long terme.

La présente invention a justement pour objet un procédé de fabrication d'une cellule d'affichage qui permet d'obtenir une étanchéité parfaite, même à long terme, pour les cellules à film électrolytique. Naturellement, ce procédé s'applique aussi, et a fortiori, aux cellules à cristal liquide;

A cette fin, l'invention a pour objet un procédé de fabrication d'une cellule d'affichage à film liquide constituée d'une première lame isolante revêtue d'une électrode, d'une seconde lame isolante transparente revêtue d'une électrode semi-transparente et d'une paroi se trouvant entre lesdites lames et à leur périphérie et étant faite en un premier matériau chimiquement inerte vis-à-vis dudit film et fusible à une première température, caractérisé en ce que:

a) on place sur et en travers de ladite paroi au moins un tube de remplissage constitué d'un second matériau ayant une température de fusion supérieure à ladite première température,

b) on scelle le tube dans ladite paroi et les première et seconde lames sur la paroi en portant les éléments de la cellule à une température au moins égale à ladite première température et inférieure à la température de fusion du second matériau.

c) on laisse refroidir les éléments de la cellule,

d) on effectue enfin une opération de remplissage de la cellule à travers ledit tube.

En plus de l'avantage relatif à l'amélioration de l'étanchéité de la cellule, le procédé de l'invention en procure un second qui est celui de faciliter l'opération de remplissage grâce à la présence d'au moins un tube disposé en travers de la paroi périphérique dont l'extrémité peut être facilement scellée par fusion sous l'action d'un échauffement rapide et localisé: cet échauffement n'a aucune action sur la tenue de la cellule du fait de l'éloignement entre le point chaud et la cellule.

La présente invention a également pour objet une cellule d'affichage à film liquide obtenue par le procédé de fabrication qui vient d'être défini.

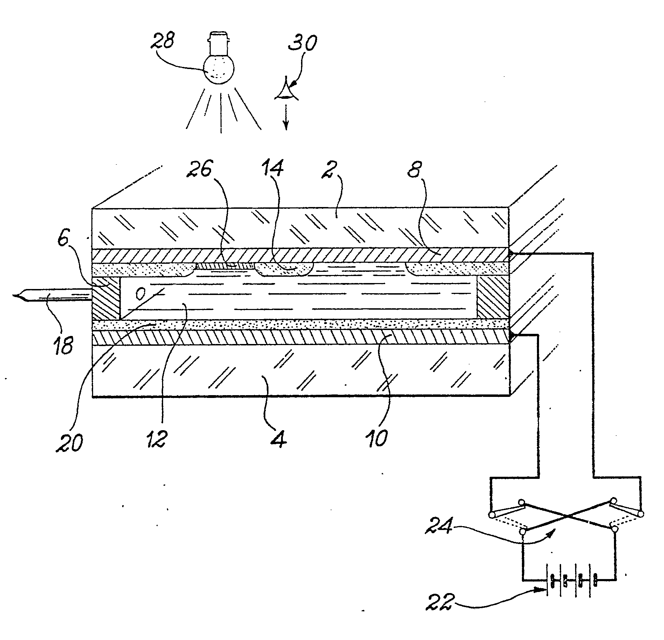

De toute façon, les caractéristiques et avantages de la présente invention apparaîtront mieux après la description qui suit, d'un exemple de réalisation donné à titre explicatif et nullement limitatif, en référence à la figure unique annexée qui représente une coupe schématique d'une cellule à film liquide obtenue selon le procédé de l'invention.

La cellule représentée sur la figure comprend deux lames parallèles 2 et 4, maintenues en place par une paroi périphérique 6 formant cale d'épaisseur et assurant l'étanchéité de la cellule. La lame 2 est transparente et revêtue d'un dépôt conducteur semi-transparent 8 formant électrode; la paroi 4 est recouverte d'une contre-électrode 10. Un film liquide 12 est intercalé entre les lames 2 et 4. Une couche 14 de matériau isolant permet de dessiner sur la lame 2 des caractères alphanumériques ou autres.

La cellule représentée comprend en outre un tube 18, fin ou capillaire, par exemple d'une fraction de millimètre de diamètre intérieur, traversant de part en part la paroi 6 et servant au remplissage de la cellule. Ce tube est obturé par fusion à son extrémité extérieure.

La cellule peut comprendre en outre un écran 20 qui masque la contre-électrode 10.

L'électrode 8 et la contre-électrode 10 sont reliées à une source de tension continue 22 à travers un double commutateur 24 qui permet d'inverser les polarités des tensions appliquées.

Des réactions électrochimiques d'oxydo-réduction entraînent le dépôt où la dissolution (selon sa polarité) sur l'électrode 8 d'une couche 26, qui peute être par exemple une couche métallique absorbante ou réfléchissante.

Le dispositif est éclairé par une source 28 et l'observation s'effectue en 30.

De préférence, la paroi 6 est constituée selon l'invention par un verre fusible de façon à permettre son assemblage avec les deux lames 2 et 4. Le tube 18 est alors de préférence, lui aussi, en verre mais avec un point de fusion situé au-delà du point de fusion du verre constituant la paroi 6.

Il va de soi qu'on pourrait n'utiliser qu'une zone fusible d'étendue limitée dans la lame 6 ou dans l'une des lames 2 et 4, au lieu de réaliser la totalité de la paroi 6 dans ledit matériau fusible comme représenté sur la figure.

Le tube fin 18 est avantageusement situé dans un plan parallèle aux lames 2 et 4, mais il pourrait être incliné ou coudé. De préférence, l'extrémité extérieure du tube dépasse de quelques millimètres le bord des lames 2 et 4. Elle peut être protégée mécaniquement en la moyant dans une goutte de colle à prise rapide, ou dans tout autre matériau de protection.

A titre explicatif, pour obtenir une telle cellule, on opère par exemple de la manière suivante:

on part d'une lame inférieure sur laquelle a été déposée une contre-électrode par exemple d'argent;

on dépose un cordon de verre fusible destiné à former la paroi latérale; ce cordon se présente sous la forme d'une pâte molle;

on place sur ce cordon, et perpendiculairement à lui, un tube fin de remplissage en verre ordinaire, de manière à ce qu'il pénètre dans ce cordon et à ce qu'il dépasse sur une longueur suffisante vers l'extérieur de la cellule;

on recuit l'ensemble de manière à produire l'évaporation du liant utilisé pour le dépôt du cordon (une demiheure à 300—350°C);

on porte l'ensemble à la température de fusion du premier verre fusible (500 à 550°C), de manière à assurer le scellement avec le tube fin;

on pose une lame supérieure revêtue d'une électrode sur l'ensemble et on chauffe à la température de fusion du premier verre fusible (500 à 550°C) pendant un quart d'heure environ pour assurer le scellement paroi-ame supérieure;

on laisse refroidir et on remplit d'électrolyte;

on réalise un chauffage intense, bref et localisé de l'extrémité extérieure du tube fin (température de l'ordre de 700°C) pour obturer ce tube: il n'y a ainsi aucune élévation de température appréciable de la paroi latérale en verre fusible donc pas de détérioration de l'étanchéité ni des composants de la cellule.

Dans une variante de ce procédé:

on remplace le dépôt du cordon de verre fusible par la mise en place de baguettes de verre fusible selon la configuration désirée;

on pose le tube fin sur la baguette;

on porte directement l'ensemble à la température de fusion du verre fusible (450°C) pour incorporer le tube fin dans la baguette de verre fusible et assurer le scellement paroi latérale-tube fin.

En ce qui concerne l'opération de remplissage de la cellule, on peut s'y prendre comme suit:

la cellule étant munie d'un seul tube de remplissage, on la dispose dans un bac contenant l'électrolyte;

on place l'ensemble dans une enceinte à vide pour évacuer à travers l'électrolyte le gaz contenu dans la cellule:

on coupe le vide et on remonte à la pression normale; le liquide rentre dans la cellule.

Dans une variante de ce procédé de remplissage:

la cellule étant munie de deux tubes fins de remplissage, on introduit le premier dans un bac contentant l'électrolyte;

le tube et la cellule étant en régime de capillarité, l'électrolyte pénètre dans la cellule.

Une fois la cellule remplie et avant fusion de l'extrémité du tube 18, ledit tube est vidé du liquide qu'il contient de la manière suivante: on élève légèrement la température de la cellule pour provoquer une dilatation du liquide; ceci a pour effet de chasser quelques gouttes de liquide par le tube; on laisse ensuite la cellule refroidir; le liquide se rétracte et se rassemble à l'intérieur de la cellule, ce qui laisse le tube vide.

En ce qui concerne le verre fusible constituant la paroi périphérique 6, on peut utiliser par exemple:

pour les dépôts de cordon, les verres fabriqués par Electro Science Laboratories qui portent la référence 4011C;

pour les baguettes fusibles, les verres fabriqués par Corning Glass qui portent la référence 7555 (température de scellement 450°C, temps de scellement 15 minutes).

La cellule d'affichage représentée sur la figure peut comprendre, comme indiqué plus haut, un écran 20 dont le rôle est de masquer la contre-électrode 10 et d'améliorer l'aspect des motifs affichés. Cet écran doit posséder une conduction ionique suffisante et être chimiquement inerte vis-à-vis de l'électrolyte. L'utilisation d'un tel écran est connue et mentionnée par exemple dans les publications FR - A - 2 170 525 et FR - A - 2 297 471.

Or, la mise en oeuvre du procédé de fabrication selon l'invention pose un problème particulier en ce qui concerne cet écran du fait de l'élévation de température provoquée, lors du scellement de la paroi périphérique sur les lames et sur le tube de remplissage. Pour résoudre cette difficulté, l'invention prévoit un mode de réalisation particulier de cet écran. Selon l'invention, le matériau constituant l'écran est composé de deux constituants: une poudre de granulométrie contrôlée assurant une porosité convenable et un liant inorganique qui, après séchage, assure la cohésion de la poudre. Ce liant peut être, par exemple, la silice hydratée ou un verre fusible.

Si la couleur de la poudre assurant la porosité n'est pas celle qui est désirée, on peut ajouter dans le mélange initial un ou plusieurs oxydes colorés sous réserve qu'ils soients stables jusqu'à une température d'eviron 500°C qui est la température à laquelle on soude les lames de la cellule.

Deux exemples peuvent être donnés pour illustrer la composition du revêtement:

EXEMPLE 1 — Revêtement blanc:

La poudre est une poudre d'oxyde de titane ($TiO_2$) dont l'indice de réfraction, supérieur à 2,5 assure une très bonne opacité.

Le liant est une silice hydratée.

Les proportions des constituants peuvent être (en volume avant séchage): $TiO_2$: 70%, silice hydratée: 30%

EXEMPLE 2 — Revêtement vert:

La poudre est de l'alumine ($Al_2O_3$).

Le liant est de la silice hydratée.

Le pigment est un oxyde de chrome $Cr_2O_3$.

Les proportions des constituants peuvent être (en volume avant séchage):

| | | |
|---|---|---|
| $Al_2O_3$ | : | 65% |
| $SiO_2$ hydratée | : | 30% |
| $Cr_2O_3$ | : | 5% |

En ce qui concerne la réalisation de cet écran, il peut être déposé par sérigraphie sur la contre-électrode avant dépôt du cordon de verre fusible ou mise en place des baguettes de verre fusible.

**Revendications**

1. Procédé de fabrication d'une cellule d'affichage à film liquide constituée d'une première lame isolante revêtue d'une électrode, d'une seconde lame isolante transparente revêtue d'une électrode semi-transparente et d'une paroi se trouvant entre lesdites lames et à leur périphérie et étant faite en un premier matériau chimquement inerte vis-à-vis dudit film et fusible à une première température, caractérisé en ce que:

a) on place sur et en travers de ladite paroi au moins un tube de remplissage constitué d'un second matériau ayant une température de fusion supérieure à ladite première température.

b) on scelle le tube dans ladite paroi et les première et seconde lames sur la paroi en portant les éléments de la cellule à une température au moins égale à ladite première température et inférieure à la température de fusion du second matériau.

c) on laisse refroidir les éléments de la cellule,

d) on effectue enfin une opération de remplissage de la cellule à travers ledit tube.

2. Procédé selon la revendication 1, caractérisé en ce qu'on utilise comme premier matériau un verre fusible.

3. Procédé selon la revendication 2, caractérisé en ce que ledit verre a une température de fusion de l'ordre de 500°C.

4. Procédé selon la revendication 1, caractérisé en ce qu'on utilise comme second matériau constituant le tube de remplissage un second verre.

5. Procédé selon la revendication 1, caractérisé en ce que l'opération de remplissage consiste à plonger l'extrémité extérieure du tube dans un volume dudit liquide, à retirer ledit tube lorsque la cellule est remplie, à obturer ledit tube par fusion en portant son extrémité extérieure à une température supérieure à la température de fusion du second matériau.

6. Procédé selon la revendication 5, caractérisé en ce que, avant l'opération de fusion de l'extrémite. on vide le tube du liquide qu'il contient en élevant légèrement la température de la cellule, ce qui provoque l'expulsion de quelques gouttes de liquide et on laisse refroidir la cellule, ce qui provoque le retrait du liquide dans la cellule.

7. Procédé selon l'une quelconque des revendications 1 à 6, caractérisé en ce que. avant dépôt de la paroi périphérique, on dépose sur la première lame revêtue de son électrode un écran poreux composé d'une poudre et d'un liant inorganique.

8. Procédé selon la revendication 7 caractérisé en ce que le liant est la silice hydratée.

9. Cellule d'affichage à film liquide constituée d'une première lame (4) isolante revêtue d'une électrode (10), d'une seconde lame (2) isolante et transparente revêtue d'une électrode (8) semi-transparente, d'une paroi (6) faite en un premier matériau chimiquement inerte vis-à-vis dudit film, ledit matériau étant fusible à une première température, et dudit film (12) inséré entre les deux lames, obtenue par le procédé selon l'une quelconque des revendications 1 à 8, caractérisée en ce qu'elle comprend au moins un tube (18) de remplissage traversant ladite paroi et constitué d'un second matériau ayant une température de fusion supérieure à ladite première température, ledit tube étant obturé par fusion à son extrémité extérieure.

### Claims

1. A method of making a liquid-film display cell formed by a first insulating plate coated with an electrode, a second transparent insulating plate coated with a semi-transparent electrode and a wall situated between and at the periphery of said plates and being made of a first material which is chemically inert to said film and which is fusible at a first temperature characterized in that:

a) at least one filling tube made of a second material having a fusion temperature above said first temperature is placed on and across said wall

b) the tube is sealed in said wall and the first and second plates are sealed on the wall by heating the elements of the cell to a temperature at least equal to said first temperature and below the fusion temperature of the second material,

c) the elements of the cell are left to cool, and
d) finally, the cell is filled through said tube.

2. A method as claimed in Claim 1, characterized in that a fusible glass is used as the first material.

3. A method as claimed in Claim 2, characterized in that said glass has a fusion temperature of the order of 500°C.

4. A method as claimed in Claim 1, characterized in that a second glass is used as the second material for the filling tube.

5. A method as claimed in Claim 1, characterized in that the filling operation comprises dipping the outer end of the tube into a quantity of said liquid, withdrawing the tube when the cell is full and closing said tube by fusion by heating its outer end to a temperature above the fusion temperature of the second material.

6. A method as claimed in Claim 5, characterized in that, before the end is fused, the tube is emptied of the liquid which it contains by slightly increasing the temperature of the cell. which causes a few drops of liquid to be expelled. and the cell is left to cool, which causes the liquid to withdraw into the cell.

7. A method as claimed in any of Claims 1 to 6, characterized in that, before deposition of the peripheral wall, a porous screen composed of a powder and an inorganic binder is applied to the first plate coated with its electrode.

8. A method as claimed in Claim 7, characterized in that the binder is hydrated silica.

9. A liquid-film display cell formed by a first insulating plate (4) coated with an electrode (10), a second transparent insulating plate (2) coated with a semi-transparent electrode (8) a wall (6) made of a first material which is chemically inert to said film and which is fusible at a first temperature, and said film (12) inserted between the two plates, obtained by the method claimed in any of Claims 1 to 8 characterized in that it comprises at least one filling tube (18) extending through said wall and made of a second material having a fusion temperature above said first temperature, said tube being closed at its outer end by fusion.

### Patentansprüche

1. Verfahren zur Herstellung einer Anzeigezelle mit Flüssigschicht. die aus einer ersten isolierenden. mit einer Elektrode uberzogenen Platte. einer zweiten isolieröden, transparenten. mit einer semitransparenten Elektrode überzogenen Platte und einer Wand zusammengesetzt ist die sich zwischen diesen Platten und an ihrem Umfang befindet und aus einem ersten gegenüber der Schicht chemisch

inerten und bei einer ersten Temperatur schmelzgaren Material hergestellt ist, dadurch gekennzeichnet, daß:

a) man auf der und durch die Wand wenigstens ein Füllrohr anordnet, das aus einem zweiten Material mit einer höheren Schmelztemperatur als der ersten Temperatur besteht,

b) man das Rohr in der Wand und die erste und die zweite Platte an der Wand dicht anbringt, indem man die Elemente der Zelle auf eine der ersten Temperatur wenigstens gleiche und der Schmelztemperatur des zweiten Materials unterlegene Temperatur bringt,

c) man die Elemente der Zelle abkühlen läßt,

d) man schließlich einen Vorgang zur Füllung der Zelle durch das Rohr durchführt.

2. Verfahren nach dem Anspruch 1, dadurch gekennzeichnet, daß man als erstes Material ein schmelzbares Glas verwendet.

3. Verfahren nach dem Anspruch 2, dadurch gekennzeichnet, daß das Glas eine Schmelztemperatur in der Größenordnung von 500°C hat.

4. Verfahren nach dem Anspruch 1, dadurch gekennzeichnet, daß man als das Füllrohr bildendes zweites Material ein zweites Glas verwendet.

5. Verfahren nach dem Anspruch 1, dadurch gekennzeichnet, daß der Füllvorgang darin besteht, das äußere Ende des Rohres in ein Volumen der Flüssigkeit zu tauchen, das Rohr zurückzuziehen, wenn die Zelle gefüllt ist, das Rohr durch Schmelzen zu verschließen, indem man sein äußeres Ende auf eine höhere Temperatur als die Schmelztemperatur des zweiten Materials bringt.

6. Verfahren nach dem Anspruch 5, dadurch gekennzeichnet, daß man vor dem Schmelzvorgang des Endes das Rohr von der Flüssigkeit, die es enthält, entleert, indem man die Temperatur der Zelle leicht erhöht, was das Austreiben einiger Flüssigkeitstropfen hervorruft, und man die Zelle abkühlen läßt, was den Rückzug der Flüssigkeit in die Zelle bewirkt.

7. Verfahren nach irgendeinem der Ansprüche 1 bis 6, dadurch gekennzeichnet daß man vor der Anbringung der Umfangswand auf der mit ihrer Elektrode überzogenen ersten Platte einen porösen Schirm abscheidet, der aus einem Pulver und einem anorganischen Bindemittel zusammengesetzt ist.

8. Verfahren nach dem Anspruch 7, dadurch gekennzeichnet, daß das Bindemittel hydratisierte Kieselsäure ist.

9. Anzeigezelle mit Flüssigschicht, die aus einer ersten isolierenden, mit einer Elektrode (10) überzogenen Platte (4), einer zweiten isolierenden und transparenten, mit einer semitransparenten Elektrode (8) überzogenen Platte (2), einer Wand (6), die aus einem ersten, gegenüber der Schicht chemisch inerten Material hergestellt ist, das bei einer ersten Temperatur schmelzbar ist, und das aus der zwischen den beiden Platten eingefügten Schicht (12) zusammengesetzt und nach dem Verfahren gemäß irgendeinem der Ansprüche 1 bis 8 erhalten ist, dadurch gekennzeichnet, daß sie wenigstens ein Rohr (18) zum Füllen aufweist, das die Wand durchsetzt und aus einem zweiten Material mit einer höheren Schmelztemperatur als der ersten Temperatur besteht, wobei das Rohr durch Schmelzen an seinem äußeren Ende verschlossen ist.